# EUROPÄISCHE PATENTSCHRIFT

(11) **EP 0 804 378 B1**
(45) Veröffentlichungstag und Bekanntmachung des Hinweises auf die Patenterteilung: **07.10.1998**
(21) Anmeldenummer: 96900917.4
(22) Anmeldetag: 08.01.1996
(51) Int. Cl.: B65G 45/22

(54) **ANLAGE ZUM SCHMIEREN, REINIGEN UND/ODER DESINFIZIEREN VON STETIGFÖRDERERN UND VERFAHREN ZUM HERSTELLEN EINES DÜSENSTOCKS DAFÜR**
INSTALLATION FOR LUBRICATING, CLEANING AND/OR DISINFECTING CONTINUOUS MECHANICAL HANDLING EQUIPMENT AND PROCESS FOR PRODUCING A NOZZLE BLOCK THEREFOR
INSTALLATION DE GRAISSAGE, DE NETTOYAGE ET/OU DE DESINFECTION DE TRANSPORTEURS CONTINUS ET PROCEDE DE PRODUCTION D'UN BLOC A BUSES

(30) Priorität: 16.01.1995 DE 19501057
(43) Veröffentlichungstag der Anmeldung: 05.11.1997
(73) Patentinhaber: LANG APPARATEBAU GMBH, 83313 Siegsdorf (DE)
(72) Erfinder: WEINERT, Harry, D-09677 Niederwiesa (DE); SELBERTINGER, Josef, D-83224 Staudach (DE); SCHEURL, Robert, D-83334 Inzell (DE)
(74) Vertreter: Wilk, Hans-Christof, Dr.
(86) Internationale Anmeldenummer: EP9600048
(87) Internationale Veröffentlichungsnummer: WO9622240

(56) Entgegenhaltungen:
- EP-A- 0 655 560
- GB-A- 2 221 887
- US-A- 5 333 724

## Beschreibung

Die Erfindung betrifft eine Anlage zum Schmieren, Reinigen und/oder Desinfizieren von Stetigförderern, insbesondere Transportbändern oder Transportketten für Lebensmittelbehälter wie Flaschen, Dosen, Gläser, Tüten und dergleichen, sowie für deren Verpackungen wie Flaschenkästen, mit mindestens einem Düsenstock, der im wesentlichen aus einem Düsenrohr und daran angebrachten rohrförmigen Düsenaufnahmen mit eingesetzten Düsen zum Aufsprühen der Schmier-, bzw. Reinigungs- oder Desinfektionslösung auf die Transporteinrichtungen besteht.

Derartige Anlagen haben üblicherweise eine zentrale Dosierstation mit einer Dosierpumpe zur Entnahme des Schmiermittelkonzentrats aus einem Gebinde und zur dosierten Abgabe in eine zum Transporteursystem führenden Stichleitung. An die Stichleitung ist eine Verteilerleitung über ein Schmierkreisventil angeschlossen. Die Verteilerleitung führt zum Düsenstock, wo die Lösung auf die einzelnen Düsen verteilt wird. Mit den Düsen wird schließlich die Flüssigkeit auf die Transportbänder bzw.- ketten aufgesprüht.

Die Erfindung findet insbesondere Anwendung in der Lebensmittelindustrie und zwar beim Abfüllen von Getränken und anderen Lebensmitteln in neue oder wiederverwendete Glas- oder Kunststoffflaschen, Dosen, Tüten usw. Dazu werden die Gebinde auf Transportbahnen, z. B. den bereits genannten Transportbändern oder Transportketten, zu den einzelnen Stationen gefördert. In der Regel bestehen die Transportbahnen aus ein- oder mehrbändigen Gliederketten aus Metall oder Kunststoff, die mit einer an den Produktionsablauf abgestimmten Geschwindigkeit angetrieben werden. Sie sind entsprechend der räumlichen Verhältnisse und des Produktionsablaufes in einzelne Abschnitte mit jeweils eigenem Antrieb aufgeteilt.

Die Transportbänder werden mit speziellen Kettengleitmitteln, die auch Bandschmiermittel genannt werden, besprüht, um die Reibung an den besonders verschleißgefährdeten Stellen zu reduzieren. Dabei handelt es sich insbesondere um die Reibflächen zwischen der Kette und der Unterlage, z. B. den Gleitschienen. Weitere kritische Stellen sind die Reibflächen zwischen der Kette und dem Transportgut, die Scharniere der Ketten, die Umlenkrollen und Führungsrollen der Ketten sowie die Reibflächen zwischen aneinanderstoßenden Gebinden.

Entsprechend dem Produktionsablauf und den Anforderungen an die Schmierung der Gliederketten und ihrer Führungen werden einzelne Transportbandabschnitte zu sogenannten Schmierkreisen zusammengefaßt. Die Hauptanforderung an die Schmieranlage besteht darin, eine aus Wasser und wasserlöslichen Chemikalien bestehende Schmiermittel lösung mit konstanter Konzentration herzustellen und diese Lösung entsprechend den Anforderungen an die einzelnen Schmierkreise auf die Transportbänder aufzubringen.

In einer Schmieranlage der eingangs genannten Art ist eine Vielzahl von Düsen erforderlich, da jeder Transportkette eine Sprühdüse zugeordnet werden soll. Die Düsen sind auf sogenannten Düsenstöcken oder Düsenträgern angeordnet. Die obengenannte Verteilerleitung ist an den Einlaß des Düsenstockes angeschlossen. Der Düsenstock dient gleichzeitig zum Verteilen der Bandschmiermittellösung zu den einzelnen Düsen und zur Aufnahme und Befestigung der die Düsen tragenden Düsenaufnahmen. Die Düsenaufnahmen enthalten häufig auch zusätzlich ein kombiniertes Kugelventilfilter. Die Anzahl der Düsen pro Düsenstock entspricht der Anzahl der Transportketten pro Transportband. Der Abstand der Düsen untereinander ist dem Mittelabstand zweier Transportketten innerhalb eines Transportbandes angepaßt.

Der Düsenstock ist im einzelnen wie folgt aufgebaut. Ein Düsenrohr dient als Kalter der Düsenaufnahmen und als Verteiler der Bandschmiermittellösung der einzelnen Düsen. Die röhrchenförmigen Düsenaufnahmen enthalten den Filter mit dem Druckhalteventil und ein auswechselbares Düsenmundstück, das hier auch Düse genannt wird. Mit einer Überwurfmutter wird das Düsenmundstück und der Filter mit Druckhalteventil lösbar an der Düsenaufnahme befestigt.

Die Erfindung beschäftigt sich mit den Düsenaufnahmen und ihrer Befestigung am Düsenrohr.

Im Stand der Technik sind die Düsenaufnahmen stoffschlüssig durch Löten oder Schweißen mit dem Düsenrohr verbunden.

In alternativen Ausführungen sind die Düsenaufnahmen formschlüssig mit dem Düsenrohr verbunden. Sie können als Hohlschraube ausgebildet sein, die in eine Gewindebohrung im Düsenrohr eingeschraubt werden. In einer anderen bekannten Befestigungsmöglichkeit sind die Düsenaufnahmen über Klemm- oder Schraubschellen an die entsprechende Öffnung im Düsenrohr angepreßt.

Die EP-A-0 655 560 beschriebt die Möglichkeit der Befestigung eines Bauteils au einem Träger mittels einer Hohlnietverbindung.

Die bekannten Befestigungsmöglichkeiten sind mit einer Reihe von Nachteilen behaftet.

Bei der Löt- oder Schweißverbindung führt die Erwärmung zu Gefügeveränderungen, die lokale Korrosionen verursachen können. Daher muß in jedem Fall eine chemische Nachbehandlung, z. B. durch Beizen, erfolgen.

Diese stoffschlüssigen Verbindungen zwischen Düsenrohr und Düsenaufnahmen können nicht am Einsatzort, sondern müssen in speziellen Werkstätten hergestellt werden. Daher ist eine oft wünschenswerte Korrektur der Anzahl der Düsen und ihrer Abstände unmittelbar vor dem Einsatz nicht möglich.

Nachteilig an den formschlüssigen Verbindungen ist die häufig während des Betriebes auftretende Undichtigkeit, da die Verbindungen sich lockern können. Außerdem lagern sich an den Spalten, Kanten, Übergängen und Hinterschneidungen im Bereich der formschlüssigen Verbindungen Schmutzpartikel ab, die Nährböden für Pilze, Bakterien, Keime und andere Mikroorganismen bilden. Dieser Umstand ist besonders nachteilig in der Lebensmittelindustrie, wo auf eine größtmögliche Hygiene Wert zu legen ist.

Der Erfindung liegt daher die Aufgabe zugrunde, bei der Anlage der eingangs genannten Art einen Düsenstock mit einer einfachen, wenig aufwendigen, am Einsatzort anzubringenden Düsenaufnahme zu entwickeln, die nach der Verbindung mit dem Düsenrohr keine oder erheblich weniger Möglichkeiten zur Ablagerung von Schmutz bieten.

Diese Aufgabe wird erfindungsgemäß dadurch gelöst, daß der Düsenstock ein Vierkantrohr ist, daß das am Düsenrohr angebrachte Ende der einstückigen Düsenaufnahme als eine von einer Seite aus steckbare und anschließbare Hohlniet ausgebildet ist und daß eine Dichtung zwischen der Außenseite des Düsenrohrs und der Auflagefläche der Düsenaufnahme am Düsenrohr vorgesehen ist.

Beim Zusammenbau des Düsenstocks wird das als Hohlniet ausgebildete Ende der Düsenaufnahme in das Vierkantrohr gesteckt und der innerhalb des Rohrs liegende Schaft mit Hilfe eines geeigneten Werkzeugs geweitet, um die Nietverbindung herzustellen. Dieses Verfahren wird hier als Einziehnietung bezeichnet.

In einer vorteilhaften Ausgestaltung der Erfindung ist die genannte Dichtung als O-Ring ausgebildet. Vorzugsweise liegt die Dichtung in einer Nut der genannten Auflagefläche ein. Damit hat der Düsenstock im Bereich der Düsenaufnahme eine glatte schmutzabweisende Oberfläche ohne Vor- und Rücksprünge und bietet damit praktisch keinen Platz zur Besiedelung mit Mikroorganismen.

Nach dem Einsetzen der Düsen, die auch Düsenmundstücke genannt werden, wird eine Überwurfmutter auf die Düsenaufnahme gesetzt und dort festgeschraubt. Ein Verdrehen der Düsenaufnahme während des Schraubvorgangs wird verhindert, in dem die an der Außenseite des Düsenrohrs anliegende Auflagefläche der Düsenaufnahme profiliert und insbesondere mit radial nach außen verlaufende Rillen versehen ist. Beim Einnieten der Düsenaufnahme wird das Profil in die Auflagefläche des Düsenrohrs eingepreßt. Die aufeinanderliegenden Profile der Auflageflächen von Düsenrohr und Düsenaufnahme verhindern damit ein Verdrehen der Düsenaufnahme beim Anziehen der Überwurfmutter.

Die erfindungsgemäße Ausbildung der Düsenaufnahme läßt sich auch auf die Einlaßöffnung des Düsenstocks anwenden. Dazu wird vorgeschlagen, daß der Düsenstock einen einstückigen Nippel als Einlaßöffnung für die aufzusprühende Flüssigkeit aufweist und das am Düsenrohr angebrachte Ende des Nippels als eine von einer Seite aus steckbare und anschließbare Hohlniet ausgebildet ist. Der Einlaßnippel wird also auf die gleiche Weise wie die Düsenaufnahme am Düsenrohr befestigt. Für die näheren Einzelheiten wird auf die oben stehenden Ausführungen verwiesen.

Die Erfindung betrifft nicht nur die Anlage zum Schmieren, Reinigen und/oder Desinfizieren von Stetigförderern, sondern auch ein Verfahren zum Herstellen eines Düsenstocks für diese Anlage.

Die bereits genannten Vorteile werden in diesem Herstellungsverfahren erreicht, in dem man mindestens eine rohrförmige Düsenaufnahme mit ihrem einen, als Hohlniet ausgebildeten Ende in eine Bohrung eines Düsenrohrs steckt, wobei eine Dichtung zwischen der Außenseite des Düsenrohrs und der Auflagefläche der Düsenaufnahme am Düsenrohr vorgesehen ist, die Düsenaufnahme dort einnietet und dann eine Düse, gegebenenfalls auch Filter und andere Teile, am anderen Ende der Düsenaufnahme, insbesondere durch eine Schraubverbindung, befestigt.

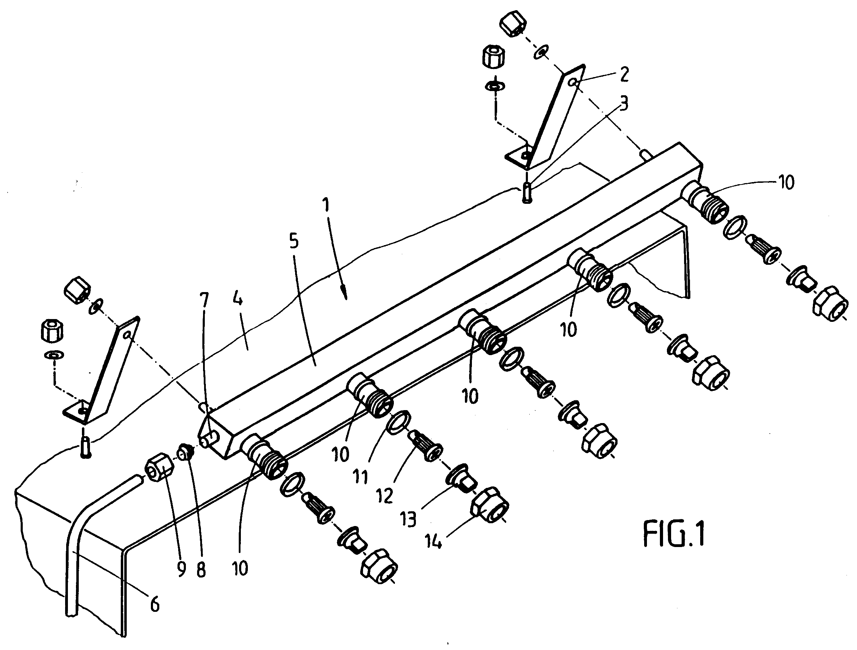

Im folgenden wird ein Ausführungsbeispiel der Erfindung anhand von Zeichnungen näher beschrieben. Es zeigen
- Figur 1: einen erfindungsgemäßen Düsenstock in Explosionsdarstellung,
- Figur 2: einen Schnitt durch einen Düsenstock mit zwei Düsenaufnahmen,
- Figur 3: die Einzelheit X von Figur 2,
- Figur 4: eine Düsenaufnahme im noch nicht eingesetzten Zustand,
- Figur 5: eine Aufsicht auf die Düsenaufnahme von Figur 4,
- Figur 6: einen Längsschnitt durch einen Einziehnippel im noch nicht eingesetzten Zustand und
- Figur 7: eine Aufsicht auf den Nippel nach Figur 6.

Ein Düsenstock 1 mit zwei Haltewinkeln 2 ist an einem Schweißbolzen 3 eines Trägers 4 befestigt. Das Düsenrohr 5, ein Vierkantrohr, wird von einer Leitung 6 (gestrichelt gezeichnet) an seinem einen Ende mit der aufzusprühenden Flüssigkeit versorgt. Dazu ist an diesem Ende des Düsenrohrs 5 ein Einschraubnippel 7 angebracht, an den der Schlauch bzw. die Leitung 6 mit einem Klemmring 8 und einer Überwurfmutter 9 befestigt wird.

Bei diesem Düsenstock sind fünf Düsenaufnahmen 10 vorgesehen. Ihre Befestigung am Düsenrohr 5 wird weiter unten im einzelnen erläutert.

Auf jede Düsenaufnahme 10 wird ein farbiger Markierungsring 11 zum Kennzeichnen der eingesetzten Düsenart aufgeschoben. In die hohle Düsenaufnahme 10 setzt man dann ein Kugelventilfilter 12, das gleichzeitig die Aufgabe eines Filters und eines Druckhalteventils erfüllt, und die gewünschte Düse 13 ein, die hier auch als Düsenmundstück bezeichnet wird. Schließlich wird auf das Außengewinde der Düsenaufnahme 10 eine Überwurfmutter 14 geschraubt.

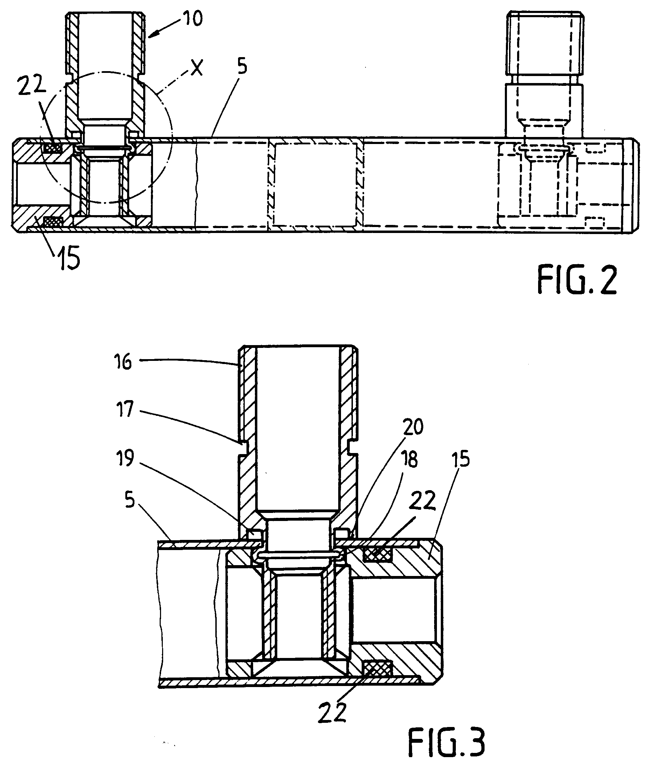

Figur 2 zeigt je eine Düsenaufnahme an den Enden des Düsenrohrs 5 sowie die an den Enden eingesetzten Teile 15. Teil 15 dient als beidseitiges Abschlußteil des Düsenträgerrohres 5. Das Abschlußteil 15 ist als Vierkant entsprechend der Innen- und Außenmaße des Düsenträgerrohres ausgebildet. Als Abdichtung zwischen Abschlußteil und dem Düsenträgerrohr dient eine elastische Formdichtung 22. Der Verschluß des Düsenträgerrohres wird durch Einstecken des Abschlußteiles in das Düsenträgerrohr erreicht. Das Abschlußteil ist weiterhin so ausgebildet, daß nach dem Einstecken in das Düsenträgerrohr eine Düsenaufnahme durch das Düsenträgerrohr und das Abschlußteil gesteckt werden kann, wie weiter unten erläutert ist.

Nach dem Vernieten des als Hohlniet ausgebildeten Schaftes der Düsenaufnahme fixiert der dadurch entstehende Nietkopf das Abschlußteil im Düsenträgerrohr. Es sichert dieses gegen Ausdrücken durch den im Düsenträgerrohr während des Betriebes vorhandenen Sprühdruck.

Das Abschlußteil kann mit Innen- oder Außengewinde zum Anschluß der Verteilerleitung ausgeführt sein. Das Abschlußteil kann aber auch ohne Anschlußgewinde als reiner Verschlußstopfen ausgeführt sein.

Teil 15 hat also die Aufgabe, das Düsenrohr seitlich zu schließen und den Einschraubnippel für die Zuführrohrleitung aufzunehmen. Es dient gleichzeitig als Aufnahme für die beiden äußeren Düsenaufnahmen. Mit dem Einziehnietvorgang wird somit ein seitliches Verschieben der Teile 15 verhindert.

Das nach außen gerichtete Ende der Düsenaufnahme 10 zeigt ein Außengewinde 16 sowie eine Nut 17 zum Einlegen des farbigen Markierungsrings. Das andere Ende der Düsenaufnahme ist als Hohlniet ausgebildet. Nach dem Einsetzen und Befestigen der Düsenaufnahme 10 ist ein Teil des innenliegenden Schafts geweitet und bildet somit den Schließkopf der Niet. Dieser aufgeweitete Bund ist mit dem Bezugszeichen 18 bezeichnet. Die Düsenaufnahme ist gegen das Düsenrohr 5 mit einen O-Ring 19 abgedichtet. Die Auflagefläche 20 der Düsenaufnahme 10 ist profiliert, um die Düsenaufnahme beim Aufschrauben der Überwurfmutter gegen Verdrehen zu sichern.

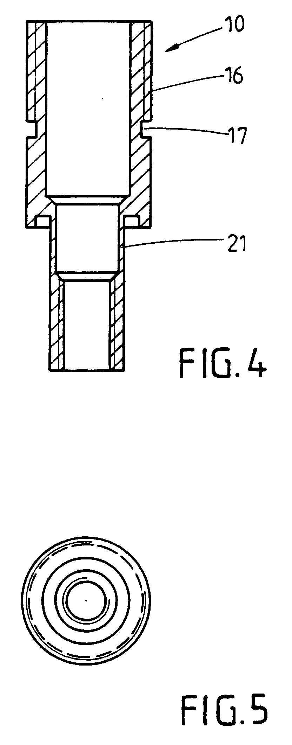

Die genannten Einzelheiten der Düsenaufnahme sind besonders deutlich in Figur 4 dargestellt. Hier ist die Düsenaufnahme im noch nicht eingesetzten Zustand gezeigt. Der zum Aufweiten vorgesehene Teil des Schaftes ist mit dem Bezugszeichen 21 bezeichnet.

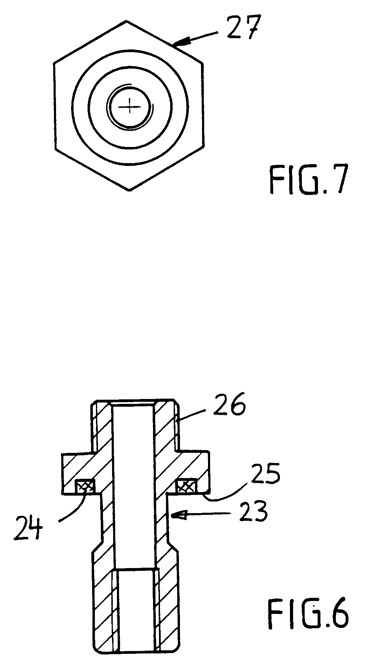

In Fig. 6 und 7 ist ein separates Anschlußteil der Verteilerleitung dargestellt, das in gleicher Weise wie die Düsenaufnahme am Düsenträgerrohr montiert werden kann. Zum Aufweiten ist der Teil 23 des Schaftes vorgegeben. Eine Dichtung 24 (O-Ring) liegt in einer Ringnut der Auflagefläche 25 ein, die als Schutz gegen Verdrehen profiliert ist. Das Anschlußgewinde für die Verteilerleitung ist mit Bezugszeichen 26 bezeichnet. Beim Anschluß der Verteilerleitung kann als zusätzlicher Verdrehschutz am Sechskant 27 gegengehalten werden.

## Patentansprüche

1. Anlage zum Schmieren, Reinigen und/oder Desinfizieren von Stetigförderern, insbesondere Transportbändern oder Transportketten für Lebensmittelbehälter wie Flaschen, Dosen, Gläser, Tüten und dergleichen, sowie für deren Verpackungen wie Flaschenkästen, mit mindestens einem Düsenstock (1), der im wesentlichen aus einem Düsenrohr (5) und daran angebrachten rohrförmigen Düsenaufnahmen (10) mit eingesetzten Düsen (13) zum Aufsprühen der Schmier- bzw. Reinigungs- oder Desinfektionslösung auf die Transporteinrichtungen besteht,
**dadurch gekennzeichnet**,
daß das Düsenrohr (5) ein Vierkantrohr ist, daß das am Düsenrohr (5) angebrachte Ende der einstückigen Düsenaufnahme (10) als ein von einer Seite aus steckbare und anschließbare Hohlniet ausgebildet ist und daß eine Dichtung (19) zwischen der Außenseite des Düsenrohrs (5) und der Auflagefläche (20) der Düsenaufnahme (10) am Düsenrohr (5) vorgesehen ist.

2. Anlage nach dem vorhergehenden Anspruch,
**dadurch gekennzeichnet**,
daß die genannte Dichtung als O-Ring (19) ausgebildet ist.

3. Anlage nach einem der vorhergehenden Ansprüche,
**dadurch gekennzeichnet**,
daß die Dichtung (19) in einer Nut der genannten Auflagefläche (20) einliegt.

4. Anlage nach einem der vorhergehenden Ansprüche,
**dadurch gekennzeichnet**,
daß die an der Außenseite des Düsenrohrs (5) anliegende Auflagefläche (20) der Düsenaufnahme (10) profiliert und insbesondere mit radial nach außen verlaufenden Rillen versehen ist.

5. Anlage nach einem der vorhergehenden Ansprüche,
**dadurch gekennzeichnet**,
daß der Düsenstock (1) einen einstückigen Nippel (7) als Einlaßöffnung für die aufzusprühende Flüssigkeit aufweist und das am Düsenrohr (5) angebrachte Ende des Nippels als eine von einer Seite aus steckbare und anschließbare Hohlniet ausgebildet ist.

6. Verfahren zum Herstellen eines Düsenstocks (1) für eine Anlage zum Schmieren, Reinigen und/oder Desinfizieren von Stetigförderern, insbesondere Transportbändern oder Transportketten für Lebensmittelbehälter wie Flaschen, Dosen, Gläser, Tüten und dergleichen, sowie für deren Verpackungen wie Flaschenkästen,
**dadurch gekennzeichnet**,
daß man mindestens eine rohrförmige Düsenaufnahme (10) mit ihrem einen, als Hohlniet ausgebildeten Ende in eine Bohrung des Düsenrohrs (5) steckt, wobei eine Dichtung (19) zwischen der Außenseite des Düsenrohrs und der Auflagefläche (20) der Düsenaufnahme am Düsenrohr vorgesehen ist, die Düsenaufnahme dort einnietet und dann eine Düse, gegebenenfalls auch Filter und andere Teile, am anderen Ende der Düsenaufnahme, insbesondere durch eine Schraubverbindung, befestigt.

## Claims

1. An arrangement for lubricating, cleaning and/or disinfecting continuous conveyors, more particularly conveyor belts or chain conveyors for food containers, such as bottles, cans, glasses, bags and the like, and for their packs, such as bottle crates, comprising at least one nozzle block (1) essentially consisting of a nozzle tube (5) and - disposed thereon - tubular nozzle holders (10) with nozzles (13) inserted therein for spraying the lubricating, cleaning and/or disinfecting solution onto the conveyors, characterized in that the nozzle tube (5) is a square tube, in that the end of the one-piece nozzle holder (10) disposed on the nozzle tube (5) is in the form of a hollow rivet designed for insertion and connection from one side and in that a seal (19) is provided between the outside of the nozzle tube (5) and the contact surface (20) between the nozzle holder (10) and the nozzle tube (5).

2. An arrangement as claimed in the preceding claim, characterized in that the said seal is an O ring (19).

3. An arrangement as claimed in either of the preceding claims, characterized in that the seal (19) is accommodated in a groove in the contact surface (20).

4. An arrangement as claimed in any of the preceding claims, characterized in that the contact surface (20) between the nozzle holder (10) and the outside of the nozzle tube (5) is profiled and, in particular, is provided with grooves extending radially outwards.

5. An arrangement as claimed in any of the preceding claims, characterized in that the nozzle block (1) comprises a one-piece nipple (7) as an inlet opening for the liquid to be sprayed on and that end of the nipple which is disposed on the nozzle tube (5) is in the form of a hollow rivet designed for insertion and connection from one side.

6. A method of making a nozzle block (1) for an arrangement for lubricating, cleaning and/or disinfecting continuous conveyors, more particularly conveyor belts or chain conveyors for food containers, such as bottles, cans, glasses, bags and the like, and for their packs, such as bottle crates, characterized in that, at one end in the form of a hollow rivet, at least one tubular nozzle holder (10) is inserted into a bore in the nozzle tube (5), a seal (19) being provided between the outside of the nozzle tube and the contact surface (20) between the nozzle holder and the nozzle tube, the nozzle holder is rivetted in place there and a nozzle, optionally with filters and other parts, is then fixed to the other end of the nozzle holder, more particularly by screwing.

## Revendications

1. Installation de graissage, de nettoyage et/ou de désinfection de transporteurs continus, en particulier de bandes transporteuses ou de transporteurs à chaînes pour récipients alimentaires tels que des bouteilles, des boîtes, des bocaux, des sacs et équivalents, ainsi que pour leurs emballages tels que des casiers à bouteilles, comportant au moins un bloc à buses (1), qui est constitué essentiellement d'un tuyau à buses (5) et de réceptacles à buses (10) de forme tubulaire, qui y sont fixés, sur lesquels sont placées des buses (13) pour pulvériser une solution de graissage, de nettoyage et/ou de désinfection sur les installations de transport, caractérisée en ce que le tuyau à buses (5) est un tube de section carrée, que l'extrémité du réceptacle à buse (10) en une seule pièce fixée au tuyau à buses (5) est construite sous la forme d'un rivet tubulaire pouvant être enfiché et raccordé d'un côté et qu'un joint (19) est prévu entre le côté extérieur du tuyau à buses (5) et la surface d'appui (20) du réceptacle à buse (10) sur le tuyau à buses (5).

2. Installation suivant la revendication précédente, caractérisée en ce que ledit joint est construit sous la forme d'un O-ring (19).

3. Installation suivant l'une des revendications précédentes, caractérisée en ce que ledit joint (19) repose dans une rainure de ladite surface d'appui (20).

4. Installation suivant l'une des revendications précédentes, caractérisée en ce que la surface d'appui (20) du réceptacle à buse (10) située à la face extérieure du tuyau à buses (5) est profilée et en particulier est pourvue de rainures s'étendant radialement vers l'extérieur.

5. Installation suivant l'une des revendications précédentes, caractérisée en ce que le bloc à buses (1) présente un embout en une pièce (7) comme ouverture d'entrée pour le liquide à pulvériser et en ce que l'extrémité de l'embout montée sur le tuyau à buses (5) est construite sous la forme d'un rivet tubulaire pouvant être enfiché et raccordé d'un côté.

6. Procédé de construction d'un bloc à buses (1) pour une installation de graissage, de nettoyage et/ou de désinfection de transporteurs continus, en particulier de bandes transporteuses ou de transporteurs à chaînes pour récipients alimentaires tels que des bouteilles, des boîtes, des bocaux, des sacs et équivalents, ainsi que pour leurs emballages, tels que des casiers à bouteilles, caractérisé en ce qu'on insère au moins un réceptacle à buse (10) tubulaire par son extrémité construite sous la forme d'un rivet tubulaire dans un trou du tuyau à buses (5), un joint (19) étant prévu entre le côté extérieur du tuyau à buses et la surface d'appui (20) du réceptacle à buse sur le tuyau à buses, qu'on y rive le réceptacle à buse et qu'on fixe ensuite une buse, le cas échéant également un filtre et d'autres pièces, à l'autre extrémité du réceptacle à buse, en particulier par un raccord vissé.
